## Europäisches Patentamt

(19) **European Patent Office**

**Office européen des brevets**

(11) Veröffentlichungsnummer: **0 294 664**
**B1**

(12) # EUROPÄISCHE PATENTSCHRIFT

(45) Veröffentlichungstag der Patentschrift:
22.11.90

(51) Int. Cl.⁵: **C09C 1/00**

(21) Anmeldenummer: **88108465.1**

(22) Anmeldetag: **27.05.88**

(54) Verfahren zur Herstellung von Einschlusspigmenten.

(30) Priorität: **06.06.87 DE 3719051**

(43) Veröffentlichungstag der Anmeldung:
**14.12.88 Patentblatt 88/50**

(45) Bekanntmachung des Hinweises auf die Patenterteilung:
**22.11.90 Patentblatt 90/47**

(84) Benannte Vertragsstaaten:
**AT BE CH DE ES FR GB GR IT LI NL SE**

(56) Entgegenhaltungen:
EP-A- 0 074 779
EP-A- 0 118 712
DE-A- 2 323 481

CHEMIKER-ZEITUNG, Band 101, Nr. 7/8,
Juli/August 1977, Seiten 319-323, Huthig Verlag GmbH,
Heidelberg, DE; A. BROLL et al.: "Einschlusspigmente,
Farbkörper nach einem neuen Prinzip"

(73) Patentinhaber: **Degussa Aktiengesellschaft,**
**Weissfrauenstrasse 9, D-6000 Frankfurt am Main 1(DE)**

(72) Erfinder: **Kiss, Akos, Dr., Dipl.-Chem.,**
**Odenwaldstrasse 2, D-8755 Alzenau-Wasserlos(DE)**
Erfinder: **Kleinschmit, Peter,Dr., Dipl.-Chem.,**
**Wildaustrasse 19, D-6450 Hanau 9(DE)**
Erfinder: **Hanich, Jürgen,Dr., Dipl.-Chem.,**
**Tucholskystrasse 18, D-6000 Frankfurt 70(DE)**
Erfinder: **Halbritter, Günter, Dipl.-Ing., In der Gartel 41,**
**D-6458 Rodenbach(DE)**
Erfinder: **Horst, Jenny, Lindenstrasse 10,**
**D-6460 Gelnhausen(DE)**

## Beschreibung

Die Erfindung betrifft ein Verfahren zur Herstellung von Einschlußpigmenten, bestehend aus einer farbgebenden Substanz, die in eine durchsichtige Hülle aus einer gegen chemische Angriffe und Glasflüsse stabilen Substanz eingeschlossen ist, durch Versetzen der farbgebenden Substanz oder ihrer Ausgangskomponenten mit der Hüllsubstanz oder derer Ausgangskomponenten und anschließendem Kalzinieren bei 500 bis 1200°C, gegebenenfalls in Anwesenheit eines Mineralisators.

Einschlußpigmente sind Farbkörper, bei denen diskrete anorganische Farbteilchen in meist kristalline, durchsichtige Hüllsubstanzen allseitig eingebettet sind, wobei die Hüllsubstanzen gegen Glasflüsse und sonstige chemische Angriffe stabil sind. Einschließbar sind im Prinzip alle bekannten farbgebenden temperaturstabilen Substanzen, insbesondere Kadmiumsulfoselenide oder -sulfide, Sulfide, Selenide und Sulfoselenide von Quecksilber und Zink, Goldpurpur, Eisenoxid und sonstige farbigen Metalloxide bzw. Metalloxidgemische. Als stabile Hüllsubstanzen haben sich insbesonders Zirkonsilikat, Zirkonoxid, Siliziumoxid, Zinnoxid, Aluminiumoxid, verschiedene Spinelle, Zinksilikat, Zirkon- und Aluminiumphospat bewährt. Diese Hüllsubstanzen widerstehen dem Angriff von Glasflüssen, von Sauerstoff bei hohen Temperaturen und chemischen Stoffen, wie z.B. Säuren.

In der DE-OS 2 312 535 wird ein Verfahren zur Herstellung solcher Einschlußpigmente beschrieben, bei dem ein Gemisch aus der farbgebenden Substanz bzw. Verbindungen, aus denen sich die farbige Substanz bildet, und der Hüllsubstanz bzw. Verbindungen, aus denen sich die Hüllsubstanz, beim Glühen bildet, bei 800 bis 1200°C geglüht wird, gegebenenfalls in Anwesenheit eines Mineralisators, wie z.B. Lithiumfluorid. Diese Pigmente werden mit Säuren ausgekocht, um noch anhaftende, säurelösliche zu entfernen.

Es ist weiterhin bekannt, die farbgebende Komponente und die Hüllsubstanz bzw. deren Ausgangsverbindungen aus einer wässrigen Lösung gemeinsam oder hintereinander zu fällen und anschließend zu kalzinieren (z.B. EP-PS 0 074 779, DE-OS 3 345 413).

Alle bisher bekannten Verfahren liefern noch keine optimalen Farbkörper bezüglich ihrer Farbintensität, man bekommt geringe Ausbeuten an Einschlußpigmenten und einen zu hohen Anteil an relativ großen Teilchen.

Es war daher Aufgabe der vorliegenden Erfindung, ein Verfahren gemäß Oberbegriff des Hauptanspruchs so zu verbessern, daß Farbkörper in hohen Ausbeuten mit großer Farbintensität und geringer Teilchengröße erhalten werden.

Diese Aufgabe wird erfindungsgemäß mit den Maßnahmen des kennzeichnenden Teils des Hauptanspruchs gelöst.

Besonder Ausgestaltungen des erfindungsgemäßen Verfahrens ergeben sich aus den Unteransprüchen.

Erfindungswesentlich ist, daß die farbgebende Substanz nicht als solche oder in Form ihrer Ausgangsverbindungen direkt dem Gemisch mit der Hüllsubstanz oder deren Ausgangsverbindungen zugesetzt wird, sondern daß die farbgebende Substanz oder eine oder mehrere ihrer Ausgangsverbindungen in einem Zeolithen und/oder an einen Zeolithen gebunden sind.

Durch den Einsatz von Zeolithen mit eingebauten Farbträgern erhält man überrachsenderweise Einschlußpigmente von hoher Farbintensität in hoher Ausbeute, deren Teilchengröße man durch die Teilchengröße des verwendeten Zeolithen steuern kann.

Zeolithe sind wasserhaltige Alkali- bzw. Erdalkalialuminiumsilikate mit unterschiedlichen $SiO_2/Al_2O_3$-Verhältnissen, die als Ionenaustauscher wirken und mit bestimmten Porenöffnungsgrößen versehen sind. Sie lassen sich mit gezielten Eigenschaften synthetisch herstellen. In diese Zeolithe lassen sich die Ausgangsverbindungen der farbgebenden Komponenten der bekannten Eischlußpigmente leicht einbauen, wobei der Einbau über Ionenaustausch oder an den inneren Oberflächen der Poren erfolgen kann.

Vorzugsweise verwendet man Zeolithe mit einem $SiO_2/Al_2O_3$-Verhältnis zwischen 1 und 10 und Teilchengrößen zwischen 1 und 20 μm. Durch die Ausbildung der gegen chemische Angriffe stabilen Hülle direkt auf der Oberfläche der einzelnen Zeolithteilchen werden definierte, wählbare Pigmentteilchengrößen erhalten. Dabei kann der Zeolith gleichzeitig als $SiO_2$- bzw. $Al_2O_3$-quelle für die Hüllsubstanz dienen.

Als Hüllsubstanz hat sich Zirkonsilikat sehr gut bewährt, wobei der Mischung Zirkonoxid und ein Teil des stöchiometrisch notwendigen Siliziumoxids zugesetzt werden, während der Rest des $SiO_2$ vom Zeolithen geliefert wird. Dabei ist es auch vorteilhaft, wenn die Zirkonoxidteilchen bzw. deren Ausgangsverbindungen kleiner als die Zeolithteilchen sind.

Als Hüllsubstanzen können beispielsweise auch Zirkonoxid, Siliziumoxid, Zinnoxid, Spinelle, Zinksilikat, Zirkon- oder Aluminiumphosphat dienen. Besondere Bedeutung als farbgebende Komponente haben die Sulfide, Selenide, Sulfoselenide und Telluride von Kadmium, Quecksilber und Zink.

Folgende Beispiele sollen das erfindungsgemäße Verfahren näher erläutern:

1. In eine Lösung von 77 g $CoSO_4/7H_2O$ in 275 g Wasser werden 100 g Na-Zeolith A mit einer mittleren Teilchengröße von 5 μm eingetragen. Die Suspension wird unter Rühren zum Sieden erhitzt. Nach dem Abkühlen filtriert man ab und wäscht sulfatfrei. Das rosagefärbte Produkt wird im Trockenschrank bei 130°C getrocknet, wobei Farbumschlag nach blau eintritt.

20 g dieses blauen Co-Zeolith A werden in einer Trockenkugelmühle zusammen mit 50,5 g $ZrO_2$, 24,5 g $SiO_2$ und 5 g $MgF_2$ intensiv gemischt und anschließend bei 1100°C 30 min kalziniert. Das blaue Pigment wird auf die gewünschte Feinheit aufgemahlen und zeigt eine ausgezeichnete Farbintensität.

2. Eine heiße Lösung von 155 g $FeSO_4/7H_2O$ in 1000 ml Wasser wird mit 200 g Na-Zeolith A gemäß

Beispiel 1 versetzt. Man erhitzt zum Sieden, filtriert und wäscht sulfatfrei. Nach dem Trocknen wird ein gelb-brauner Fe-Zeolith vom Typ ZK 4 erhalten.

Aus einer Lösung von 81 g $ZrOCl_2/8H_2O$ in 300 ml Wasser wird durch Zugabe von $NH_4OH$ das Zirkonoxidhydrat gefällt. Man versetzt unter Rühren mit 63 g Fe-Zeolith, filtriert und wäscht mit Wasser. Nach dem Trocknen bei 130°C wird das feine Pulver bei 1000°C 30 min kalziniert.

Man erhält ein rotes Pigment, das zur Einfärbung von Glasuren einsetzbar ist.

3. Gemäß Beispiel 1 wird unter Verwendung von 100 ml Wasser mit 54 g Cd $(NO_3)_2/4H_2O$ und 50 g Na-Zeolith A ein Na-Cd-Austausch durchgeführt. 17 g des gewaschenen und getrockneten Cd-Zeolithen wird in einer Schlagmühle mit 53 g $ZrO_2$, 20 g $SiO_2$, 3,0 g LiF, 4,8 g $Na_2SO_3$, 1,2 g Se, 1,0 g $K_2CO_3$ und 1,8 g Zucker gemischt. Nach Zusatz von 10% Wasser kalziniert man bei 1050°C 15 min. Durch eine anschließende Wäsche mit $HCl/H_2O_2$ wird freies $Cd^{2+}$ und Se entfernt. Es wird ein orangengefärbtes, glasurstabiles Pigment mit hoher Farbintensität erhalten.

Die Einschlußbraten lagen bei den obigen Beispielen zwischen 30 und 80%, die mittleren Teilchengrößen zwischen 3 und 20 µm.

## Patentansprüche

1. Verfahren zur Herstellung von Einschlußpigmenten, bestehend aus einer farbgebenden Substanz, die in einer durchsichtigen Hülle aus einer gegen chemische Angriffe und Glasflüsse stabilen Substanz eingeschlossen ist, durch Versetzen der farbgebenden Substanz oder ihrer Ausgangskomponenten mit der Hüllsubstanz oder derer Ausgangskomponenten und anschließendem Kalzinieren bei 500 bis 1200°C, gegebenenfalls in Anwesenheit von Mineralisatoren, dadurch gekennzeichnet, daß die farbgebende Substanz oder eine oder mehrere Ausgangskomponenten der farbgebenden Substanz in einem und/oder an einen Zeolithen gebunden sind.

2. Verfahren nach Anspruch 1, dadurch gekennzeichnet, daß das $SiO_2/Al_2O_3$-Verhältnis der eingesetzten Zeolithe zwischen 1 und 10 liegt.

3. Verfahren nach Anspruch 1 und 2, dadurch gekennzeichnet, daß die mittlere Zeolithteilchengröße zwischen 1 und 20 µm liegt.

4. Verfahren nach Anspruch 1 bis 3, dadurch gekennzeichnet, daß als Hüllsubstanz Zirkonoxid und Siliziumoxid zur Bildung von Zirkonsilikat eingesetzt werden.

5. Verfahren nach Anspruch 1 bis 4, dadurch gekennzeichnet, daß die eingesetzten Zirkonoxid- und Siliziumoxidteilchen kleiner als die Zeolithteilchen sind.

## Claims

1. A process for the preparation of inclusion pigments consisting of a colour producing substance enclosed in a transparent shell of a substance resistant to chemical attack and glass fluxes by addition of the enveloping substance or its starting components to the colour producing substance or its starting components followed by calcining at 500 to 1200°C, optionally in the presence of mineralisers, characterised in that the colour producing substance or one or more starting components of the colour producing substance is or are bound in and/or on a zeolite.

2. A process according to claim 1, characterised in that the $SiO_2/Al_2O_3$ ratio in the zeolites used is from 1 to 10.

3. A process according to claims 1 and 2, characterised in that the average particle size of the zeolite is from 1 to 20 µm.

4. A process according to claims 1 to 3, characterised in that the enveloping substance used is zirconium oxide and silicon oxide for the formation of zirconium silicate.

5. A process according to claims 1 to 4, characterised in that the zirconium oxide and silicon oxide particles used are smaller than the zeolite particles.

## Revendications

1. Procédé d'obtention de pigments d'inclusion qui consistent en une substance tinctoriale qui est incorporée dans un recouvrement transparent à base d'une substance stable contre les attaques chimiques et les coulées de verre, par addition de la substance tinctoriale ou de ses composants de départ, à la substance de recouvrement ou ses composants de départ, et calcination subséquente à 500–1200°C, le cas échéant, en présence d'agents de minéralisation, caractérisé en ce que la substance tinctoriale ou un ou plusieurs composants de départ de la substance tinctoriale sont liés dans et/ou sur des zéolithes.

2. Procédé selon la revendication 1, caractérisé en ce que le rapport $SiO_2/Al_2O_3$ de la zéolithe mise en œuvre, se situe entre 1 et 10.

3. Procédé selon la revendication 1 et la revendication 2, caractérisé en ce que la taille moyenne des particules de zéolithe se situe entre 1 et 20 µm.

4. Procédé selon les revendications 1 à 3, caractérisé en ce que comme substance de recouvrement, on met en œuvre de l'oxyde de zirconium et de l'oxyde de silicium en vue de la formation de silicate de zirconium.

5. Procédé selon les revendications 1 à 4, caractérisé en ce que les particules d'oxyde de zirconium et d'oxyde de silicium mises en œuvre sont plus petites que les particules de zéolithe.